# EUROPEAN PATENT SPECIFICATION

(11) **EP 1 637 888 B1**
(45) Date of publication and mention of the grant of the patent: **02.07.2008**
(21) Application number: 05020466.8
(22) Date of filing: 20.09.2005
(51) Int. Cl.: G01N 35/04, G01N 21/55

(54) **Apparatus for assay in utilizing attenuated total reflection**
Analysevorrichtung unter Verwendung von abgeschwächter Totalreflektion
Dispositif d'analyse utilisant la réflexion totale atténuée

(30) Priority: 21.09.2004 JP 2004272959
(43) Date of publication of application: 22.03.2006
(73) Proprietor: FUJIFILM Corporation, Minato-ku Tokyo (JP)
(72) Inventor: Muraishi, Katsuaki Fuji Photo Film Co., Ltd., Ashigarakami-gun, Kanagawa (JP)
(74) Representative: Klunker . Schmitt-Nilson . Hirsch

(56) References cited:
- EP-A- 0 994 355
- EP-A- 1 186 881
- EP-A- 1 243 916
- EP-A- 1 324 019
- US-A- 5 443 791

## Description

### BACKGROUND OF THE INVENTION

### 1. Field of the Invention

The present invention relates to an assay apparatus for assay in utilizing attenuated total reflection according to the preamble of claim 1. More particularly, the present invention relates to an apparatus for assay in utilizing attenuated total reflection, which is suitable for automation in transfer between processing stages related to the assay.

### 2. Description Related to the Prior Art

An assay apparatus in utilizing attenuated total reflection for assaying a sample is known in the field of the biosensor. A thin film, or metal film, is formed on a transparent dielectric medium. One surface of the metal film is a sensing surface where reaction of a sample occurs. Another surface of the metal film is a light entrance surface where light is applied by satisfying a condition of total reflection. The reaction is detected to assay the sample according to attenuation of the reflected light from the light entrance surface. U.S.P. No. 5,313,264 (corresponding to JP-A 4-501462) discloses a surface plasmon resonance (SPR) sensor as a typical example for this assay.

In a metal, free electrons vibrate to generate the compressional wave called a plasma wave. Surface plasmon is a term to mean the compressional wave created on the surface of the metal and included in plasmon as quantized expression of the compressional wave. The surface plasmon travels along the surface of the metal. The surface plasmon resonance (SPR) assay apparatus is constructed to detect surface plasmon resonance created on the sensing surface which is a first surface of the metal film.

Light for detection is applied to a light entrance surface of the metal film that is back to the sensing surface so that the total reflection condition is satisfied, namely at an angle of incidence equal to or more than a critical angle. In addition to the total reflection created on the light entrance surface, a small component of the light passes through the metal film without reflection, and penetrates to the sensing surface. A wave of the penetrating component is called an evanescent wave. Surface plasmon resonance (SPR) is created when frequency of the evanescent wave coincides with that of the surface plasmon. In response to this, intensity of the reflected light attenuates remarkably. In the assay apparatus, the attenuation in the reflected light reflected by the light entrance surface is detected, to recognize creation of the SPR on the sensing surface.

The angle of incidence, namely resonance angle of the light to generate the SPR depends on the refraction index of the transmission medium transmitting evanescent wave and surface plasmon. In other words, a change in the resonance angle to create SPR changes in response to a change in the refraction index of the transmission medium. The substance contacting the sensing surface is a transmission medium transmitting the evanescent wave and surface plasmon. If binding or dissociation between two molecules occurs on the sensing surface, the resonance angle changes because of a change in the refraction index of the transmission medium. In the SPR system, the change in the refraction index is detected, to measure interaction of molecules.

The assay apparatus can be used for various kinds of studies in a biochemical field or the like, for example to study interaction of protein, DNA and various biomaterials, and to select candidate drugs by screening. Also, the technique is useful in the fields of the clinical medicine, food industries and the like. It is possible to use one of two substances as a ligand and another of them as an analyte if those have bioaffinity. For the purpose of screening, protein as biomaterial is used as ligand. Candidate drugs are discretely used as analyte, and contacted with the ligand on the sensing surface, to study interaction.

JP-A 6-167443 and U.S.P. No. 5,822,073 disclose an SPR assay apparatus in which an optical system of Kretschmann configuration is used for incidence of light to the metal film. According to the Kretschmann configuration, the light entrance surface of the metal film is fitted on a prism, which condenses light and directs the light to the light entrance surface in a manner conditioned for total reflection. A sample or ligand is immobilized on the sensing surface. A flow channel is formed to have the sensing surface inside, and causes analyte fluid to flow. The analyte fluid is introduced in the flow channel to flow, and is caused to contact the ligand. Interaction between the analyte fluid and the ligand is assayed by detecting surface plasmon resonance created during the reaction.

JP-A 6-167443 discloses an assay stage disposed in the apparatus casing and having a prism and a flow channel. A sensor of a chip type according to the SPR system is placed on the assay stage, the sensor including a glass base board which is dielectric and transparent, and metal film overlaid thereon. The sensor of the chip type is secured to the apparatus casing removably, and positioned so as to set the sensor surface inside the flow channel of the casing, and set the light entrance surface on the prism. Prior to the assay, it is necessary in a pre-treatment to immobilize ligand on metal film of the sensor of the chip type. This is ligand immobilization. According to the SPR system of JP-A 6-167443, the sensor of the chip type is kept mounted on the assay stage.

At first before the assay, the sensing surface of the sensor of the chip type appears externally. A portion of the flow channel at the sensing surface is open. When the sensor of the chip type is mounted on the assay stage, the sensing surface covers and encloses the open portion of the flow channel. This enables introduction of liquid to the flow channel. Ligand fluid is introduced to the flow channel, and ligand is immobilized. After this, analyte fluid is introduced before assay is made.

However, there is a problem in the above assay by use of the sensor of the chip type. The assay process directly follows the immobilization for one sensor. Efficiency or throughput in the operation of the assay system cannot be raised if the immobilization is made for a plurality of the sensor of the chip type. The same assay stage is used for either of the immobilization and the assay process. The assay process would not be conducted during the immobilization for next sample. The immobilization has a low speed of a rate-determining level defining the low speed of the entire assay system even though the assay process is possible in a quick manner.

It is conceivable to raise throughput of the assay by the immobilization for plural sensors together, and by serially assaying plural sensors after the immobilization. The sensors are mounted on the assay stage and subjected to the immobilization. Each one of the sensors after the immobilization is removed from the assay stage. Other sensors are then mounted on the assay stage for the immobilization. After this, the sensors after the immobilization is mounted on the assay stage one after another, and subjected to the assay. Thus, the immobilization can be completed together before the assay in the collective manner irrespective of time required by the immobilization. Improvement in the throughput of the assay might be expected.

In view of efficiency in successive processes for the assay, it is preferable to prepare a large number of sensor units with an immobilized sample, and then to assay by use of those at one time together, owing to short time enough for the assay itself. It is necessary in a sample immobilizing device to handle a group of numerous sensor units together for immobilizing operation simultaneously. In the immobilizing step, ligand is introduced to plural sensor units, which are left to stand before completion of the immobilization. After this, the sensor units are transferred from the sample immobilizing device to the assay apparatus, and are subjected to assays.

The known assay apparatus of the SPR is the external immobilizing type. If simplification in handling is required for the assay, automation in the transfer is required. However, a transfer mechanism cannot be usefully added between the sample immobilizing device and the assay apparatus for transfer of a sensor unit in view of the automating the transfer to the assay apparatus. This is because immobilization for a second sample next to a first sample is impossible while the first sample is exited from a stage in the sample immobilizing device. No known technique can result in high efficiency in the immobilization in view of simplification of the handling.

An assay apparatus in accordance with the preamble of claim 1 is known from EP 1 186 881 A1. In this prior art assay apparatus, a turntable is provided around which four positions are provided between which the turntable is intermittently rotated by 90°. Four sensor units are disposed on the turntable at angular intervals of 90°. At a first position, one sensor unit is transferred from a sensor unit supply means. After rotating the turntable by 90°, the sensor unit is held at a sample supply position. Then, at a measuring position the sample is analyzed. Then, the sensor unit is transferred to a discharge position.

### SUMMARY OF THE INVENTION

In view of the foregoing problems, an object of the present invention is to provide an apparatus for assay in utilizing attenuated total reflection, which is suitable for automation in transfer between processing stages related to the assay.

In order to achieve the above and other objects and advantages of this invention, an assay apparatus for assay in utilizing attenuated total reflection has the features of claim 1.

Preferably, the at least one sensor unit is plural sensor units. A sensor holder is used for containing the plural sensor units to transfer the sensor units together between the immobilizing stage, the assay stage and the stacking stage.

Preferably, each of the sensor units includes plural flow channels, respectively having the sensing surface, and provided with the ligand and the analyte introduced thereto.

Preferably, the assay stage sequentially assays for the plural sensor units in the sensor holder one after another.

Furthermore, first and second casings constitute respectively the immobilizing and assay stages. A third casing is separate from any of the first and second casings, for constituting the stacking stage.

In one preferred embodiment, furthermore, a first casing constitute the immobilizing stage. A second casing is separate from the first casing, for constituting the assay stage. The stacking stage is positioned in either one of the first and second casings.

Preferably, the stacking stage includes a stacking rack, and plural tray portions, incorporated in the stacking rack, for containing respectively the plural sensor units.

Preferably, the stacking stage includes a stacking rack for containing plural sensor holders that are the sensor holder.

Preferably, the stacking stage includes a tray portion for containing plural sensor holders comprised by the sensor holder.

Furthermore, a first transfer mechanism moves the sensor holder from the immobilizing stage into the stacking stage. A second transfer mechanism moves the sensor holder from the stacking stage into the assay stage.

Preferably, the stacking stage includes a stacking rack, and plural tray portions, incorporated in the stacking rack, for containing respectively the plural sensor holders.

Furthermore, a tray setting mechanism moves one of the stacking rack and the first or second transfer mechanism relative to a remaining one thereof in a substantially vertical direction, so as to set one of the tray portions at a sensor holder to be moved in or out at the first or second transfer mechanism.

Preferably, the stacking rack includes a rack casing, having a prismatic tubular shape, and disposed to extend substantially in the vertical direction. At least one lateral opening is formed in a lateral face of the rack casing, for allowing the first and second transfer mechanisms to access the tray portions, to keep the sensor holder movable in and out.

Preferably, the tray setting mechanism moves the stacking rack.

Furthermore, a controller determines an amount of immobilization in the immobilizing stage and an amount of storing in the stacking storage according to an amount of assay in the assay stage.

Preferably, the stacking stage includes an environment conditioning unit for adjusting an environmental condition.

Preferably, the environment conditioning unit comprises a temperature adjuster.

Preferably, the sensor unit includes a flow channel block secured to an upside of the dielectric medium. A flow channel is formed in the flow channel block to extend in a longitudinal direction of the flow channel block, for causing a flow of the ligand or the analyte to the sensing surface. At least one lid is secured on an upside of the flow channel block, to cover the flow channel block.

Furthermore, a pair of retaining projections are formed to project from two ends of the dielectric medium as viewed in the direction of the flow channel, for positioning the sensor unit in the assay stage.

Preferably, the sensor unit further includes a slit, formed in the lid, positioned at an end opening of the flow channel, for being pushed open by external operation.

Preferably, the sensor unit further includes at least one retaining block, disposed between the flow channel block and the lid, for securing the flow channel block to the dielectric medium. A receiving orifice is formed in the retaining block, for keeping liquid passable between the end opening of the flow channel and the slit.

Preferably, the sensor unit further includes adhesive tape for securing the lid to the retaining block.

Furthermore, at least one first retaining portion formed on the dielectric medium in a lateral surface thereof. At least one second retaining portion is formed on the retaining block, engageable with the first retaining portion, for securing the retaining block to the dielectric medium, to keep the flow channel block retained.

Preferably, the sensor unit further includes a positioning mechanism for keeping the slit at the end opening of the flow channel by positioning the lid on the retaining block.

Preferably, the ligand becomes immobilized after being introduced to the sensor unit and before completion of being stored in the stacking stage.

Consequently, the assay apparatus of the present invention is suitable for automation in transfer between processing stages related to the assay.

### BRIEF DESCRIPTION OF THE DRAWINGS

The above objects and advantages of the present invention will become more apparent from the following detailed description when read in connection with the accompanying drawings, in which:
Fig. 1A is a cross section, partially broken, illustrating a sensor unit in an assay apparatus according to the SPR sensing and in a sample immobilizing process;
Fig. 1B is an explanatory view in cross section, illustrating the assay apparatus in an assay process and data analyzing process;
Fig. 2 is an exploded perspective view illustrating the sensor unit;
Fig. 3 is a perspective view, partially broken, illustrating the sample immobilizing device;
Fig. 4 is a perspective view illustrating the assay apparatus;
Fig. 5 is a perspective view, partially broken, illustrating a stacking device; and
Fig. 6 is an explanatory view in section, illustrating the stacking device.

### DETAILED DESCRIPTION OF THE PREFERRED

### EMBODIMENT(S) OF THE PRESENT INVENTION

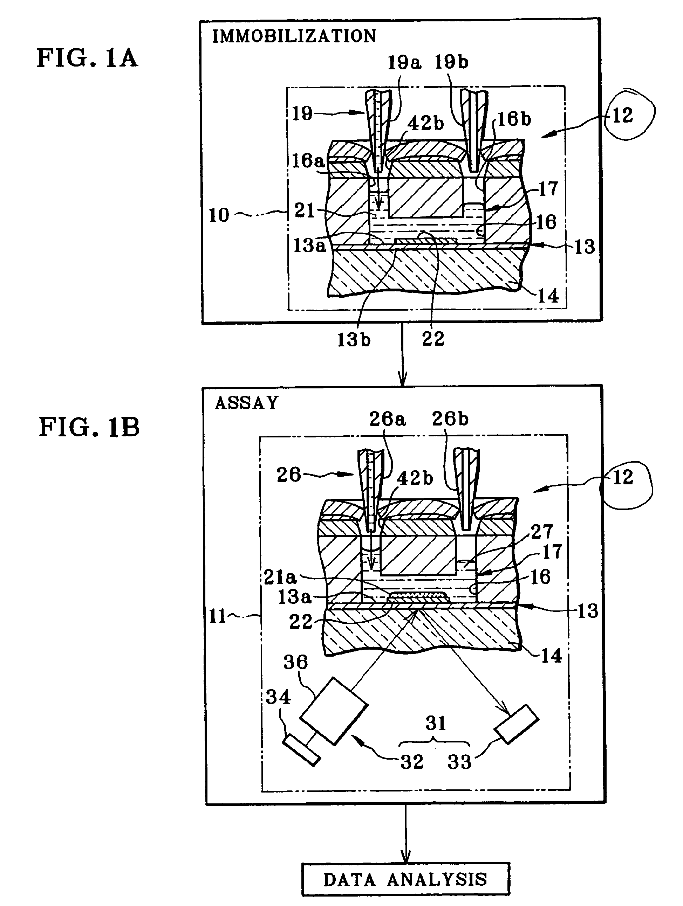

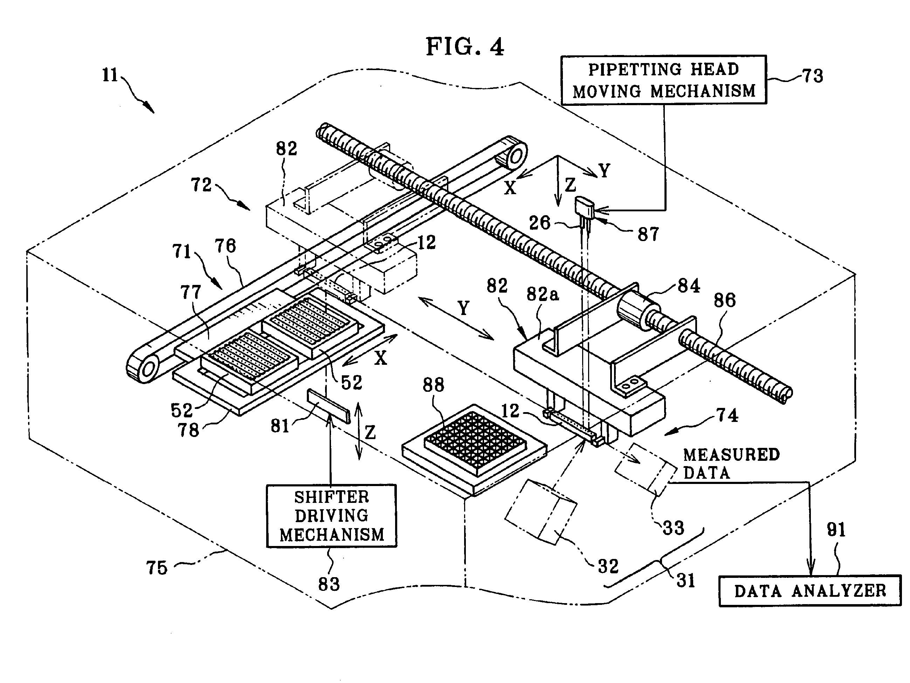

In Figs. 1A and 1B, a system for measuring or assay according to SPR (surface plasmon resonance) is illustrated. A sequence of the assay system is constituted by three processes which are a sample immobilizing process, assay process and data analyzing process. The assay system includes a sample immobilizing device 10, an assay apparatus 11, and a data analyzer 91, which is illustrated in Fig. 4.

A surface plasmon resonance (SPR) biosensor is used as a sensor unit 12 for assay. The sensor unit 12 includes a metal film 13, a prism 14 and a flow channel 16. A first surface of the metal film 13 is a sensing surface 13a where surface plasmon resonance is created. A second surface of the metal film 13 is an interface or light entrance surface 13b where the prism 14 is fitted. The flow channel 16 extends along the sensing surface 13a, and causes ligand and analyte as fluids to flow.

An example of material for the metal film 13 is gold (Au). A thickness of the metal film 13 is 50 nm. The thickness can be changed for the suitability in view of the material of the metal film 13, a wavelength of light to be applied, and the like. The prism 14 is a transparent dielectric medium or block, overlaid with the metal film 13, and also is an optical element for condensing light toward the light entrance surface 13b for satisfying the condition of the total reflection. The flow channel 16 is a U-shaped conduit, and has an entrance end opening 16a and an exit end opening 16b. A diameter of the flow channel 16 is approximately 1 mm. An interval between the entrance end opening 16a and the exit end opening 16b is approximately 10 mm.

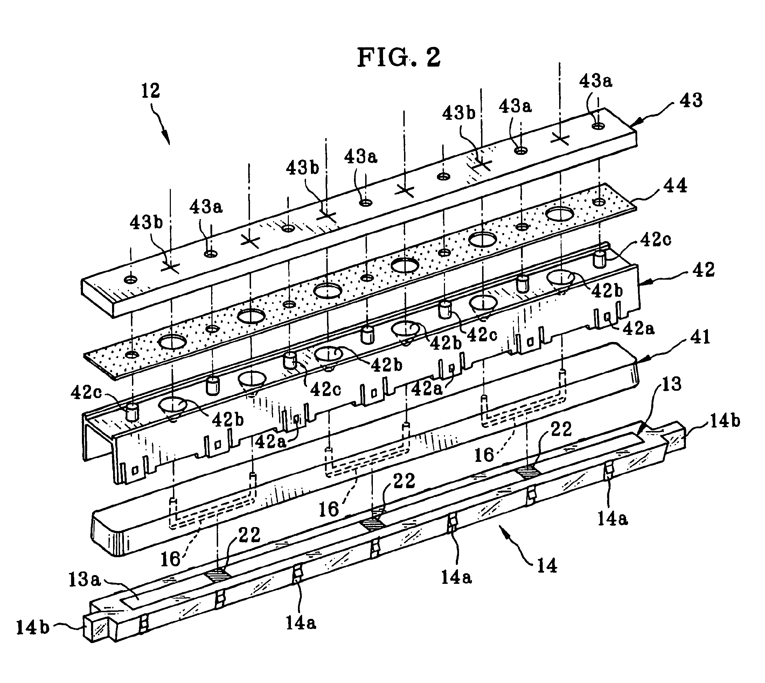

A lower side of the flow channel 16 is open initially, but closed in a firmly enclosed manner by covering of the sensing surface 13a. Sensor cells 17 are constituted by combinations of the flow channel 16 and the sensing surface 13a. The sensor unit 12 includes a plurality of the sensor cells 17. See Fig. 2. This will be described later in detail.

The immobilizing process is a binding step of ligand on the sensing surface 13a. At first, the sensor unit 12 is set in the sample immobilizing device 10. A pipette couple 19 is included in the sample immobilizing device 10, and has dispensing and removing pipettes 19a and 19b. The pipette 19a is set at the entrance end opening 16a. The pipette 19b is set at the exit end opening 16b. The pipette 19a introduces liquid to the flow channel 16. The pipette 19b sucks and removes liquid from the flow channel 16. The introduction with the pipette 19a is at the same time as the removal with the pipette 19b. Ligand solution or ligand fluid 21, as a fluid which contains ligand or biomolecule and fluid medium, is introduced through the entrance end opening 16a by the pipette couple 19.

A linker film 22 is overlaid on a middle portion of the sensing surface 13a for binding with the ligand. In the manufacturing process of the sensor unit 12, the linker film 22 is formed. As the linker film 22 is a basis for immobilizing the ligand, a material for the linker film 22 is selectively determined.

Pre-treatment before immobilization with the ligand fluid 21 is wetting of the linker film 22 by use of liquid buffer, and activation of the linker film 22 for the purpose of facilitating binding of the ligand to the linker film 22. An example of a method is the amine coupling method. An example of material for the linker film 22 is carboxy methyl dextran, to bind an amino group contained in the ligand with the dextran directly by a covalent bond. An example of liquid for the activation is mixture of N'-(3-dimethylaminopropyl) carbodiimide hydrochloride (EDC) and N-hydroxy imide succinate (NHS). After the activation, liquid buffer for immobilization is introduced to wash and clean the flow channel 16.

Various liquids are available for use as the liquid buffer for immobilization, and solvent or diluent for the ligand fluid 21. Examples of the liquids include buffer liquids, or physiological saline water and other aqueous solutions of physiological salts, and pure water. It is possible according to a type of the ligand to determine suitably solution types and pH values of the solutions, and types of substances to be mixed, and their density. If a biomaterial is used as a ligand, physiological saline water is used of which pH value is kept neutralized. In the amine coupling method described above, the linker film 22 is electrified negatively because of the carboxy methyl dextran. In consideration of this, it is possible to use phosphate buffered saline (PBS) solution having strong operation of buffer and containing phosphate salt at high density which is not physiological, because protein can be electrified positively for the purpose of facilitating binding with the linker film 22.

After the activation and washing, the ligand fluid 21 is introduced to the sensor cells 17 for a ligand immobilizing process. Ligand or sample 21a such as biomolecule diffused in the ligand fluid 21, in introducing the ligand fluid 21, gradually comes near to the linker film 22 and binds with the linker film 22. This is immobilization of the ligand 21a on the sensing surface 13a. It is general that a step of the immobilization requires approximately one (1) hour, during which the sensor unit 12 is preserved in an environment conditioned suitably, for example at a conditioned temperature. In the course of the immobilization, the ligand fluid 21 in the flow channel 16 may be left to stand in a stationary state. However, the ligand fluid 21 can be preferably stirred or turbulently flowed for ensured fluidity in the flow channel 16. The stirring or turbulent flow can promote binding of the ligand 21a with the linker film 22, to raise an immobilized amount of the ligand 21a.

When the immobilization of the ligand 21a on the sensing surface 13a is completed, then the ligand fluid 21 is removed from the flow channel 16. The pipette 19b discharges the ligand fluid 21 by suction. After this, the sensing surface 13a is washed by feeding washing liquid into the flow channel 16. A blocking step, if required, is added after the washing. A blocking liquid is introduced into the flow channel 16, to render inactive the reaction group remaining without binding with the ligand. A preferable example of the blocking liquid is ethanol amine hydrochloride. After the blocking, the flow channel 16 is washed again. Then evaporation retardant is introduced to the flow channel 16, which will be described in detail later.

For the assay process, the sensor unit 12 is set in the assay apparatus 11. A pipette couple 26 is disposed in the assay apparatus 11 in the same manner as the pipette couple 19 in the sample immobilizing device 10. The pipette couple 26 introduces liquid of several types into the flow channel 16 through the entrance end opening 16a. At first, liquid buffer for assay is introduced into the flow channel 16. After this, analyte solution or analyte fluid 27 as a fluid which contains analyte and fluid medium, is introduced into the flow channel 16. Again, the liquid buffer is introduced after the analyte fluid 27. Note that the flow channel 16 may be cleaned or washed before initially introducing the liquid buffer. Reading of data starts upon initially introducing the liquid buffer in order to detect a reference level of a signal. The reading is continued until the introduction of the liquid buffer at the second time after entry of the analyte fluid 27. It is possible not only to detect the reference level but to assay reaction or binding between the analyte and the ligand, and to measure a signal until release between the analyte and ligand in response to introduction of the liquid buffer.

There are a reaction region (act) and a reference region (ref) formed in the linker film 22. The reaction region has immobilization of a ligand, and is a region for reaction between the ligand and analyte. The reference region does not have immobilization of a ligand, and is used for outputting a reference signal for comparison with a signal retrieved from the reaction region. Note that the reference region is formed in the course of film production of the linker film 22. An example of a process of the forming has steps of surface processing of the linker film 22 at first, and then rendering the reaction groups inactive in approximately a half of an entire area of the linker film 22 for binding with ligand. Thus, a half of the linker film 22 becomes the reaction region. A remaining half of the linker film 22 becomes the reference region.

An act-signal and ref-signal generated from those regions are measured simultaneously in the course of a period starting upon detection of a reference level, and then reaction of binding, and ending upon releasing. Data analysis is effected by obtaining a difference or ratio of the act-signal and ref-signal. For example, the data analyzer 91 obtains data of a finite difference between the act-signal and ref-signal, and analyzes various items according to the finite difference. This makes it possible to cancel electric noise caused by external irregularities, such as individual specificity of sensor units or sensor cells, mechanical changes of the assay apparatus, temperature changes of the liquid, and the like. A signal with a high S/N ratio can be obtained.

Various liquids are available for use as the liquid buffer for assay, and solvent or diluent for the analyte fluid 27. Examples of the liquids include buffer liquids, or physiological saline water and other aqueous solutions of physiological salts, and pure water. It is possible according to a type of a ligand to determine suitably solution types and pH values of the solutions, and types of substances to be mixed, and their density. To facilitate dissolving of the analyte, dimethyl sulfo-oxide (DMSO) can be added to the physiological saline water. The use of the DMSO is reflected to a level of an output signal. The buffer for assay is used for detecting the reference level of the signal, as described above. If DMSO is contained in the solvent for the analyte, it is preferable to use buffer for assay at a DMSO density approximately equal to that of the solvent in the analyte.

In general, the analyte fluid 27 may be kept preserved for a long time, for example one year. It is likely that a difference occurs between an initial level and a current level of the DMSO density owing to a change with time. If assay with high precision is required, such a difference in the density is estimated according to the ref-signal level upon introducing the analyte fluid 27, so that measured data can be compensated for by DMSO density compensation. Compensation data for the DMSO density compensation is obtained before introducing the analyte fluid 27. A plurality of liquid buffers different in the DMSO density are introduced to the sensor cells 17. Amounts of changes in the levels of ref-signal and act-signal are evaluated so as to obtain the compensation data.

An optical measuring unit or optical assay unit 31 is disposed in the assay apparatus 11. An illuminator 32 and a photo detector 33 are included in the optical assay unit 31. The reaction between the ligand and analyte can be recognized as a change of a resonance angle, which is an angle of incidence of light received by the light entering surface. To this end, the illuminator 32 is caused to apply light to the light entrance surface 13b at various values of angles of incidence satisfying a condition of the total reflection. The illuminator 32 includes a light source device 34 and an illuminating optical system 36, which includes a condensing lens, a diffusing plate and a polarizer. A position and angle of the installation of those elements are so determined that an angle of incidence of the light satisfies the condition of the above total reflection.

Examples of the light source device 34 include a light emitting diode (LED), laser diode (LD), super luminescent diode (SLD), and other light emitting element. A single element is used as the light source device 34 as a point light source. Also, a plurality of elements as the light source device 34 may be arranged as a surface light source. The diffusing plate diffuses light from the light source device 34, and suppresses onset of irregularity in the light amount. The polarizer allows only p-polarized light to pass, the p-polarized light creating the surface plasmon resonance. Note that no polarizer is required if directions of rays emitted by the light source device 34, for example an LD, are kept equal. However, a diffusing plate may be combined with the light source device 34 of a type of which directions of emitted rays are kept equal. Directions of rays in polarization are changed unequal by the passage through the diffusing plate. For this structure, the polarizer can be utilized to set equal the directions of the rays. The light obtained after the diffusion and polarization is condensed by a condensing lens, and directed to the prism 14. It is possible to travel rays with various angles of incidence toward the light entrance surface 13b without irregularity in the intensity.

The photo detector 33 receives light reflected by the light entrance surface 13b, and detects intensity of the light. Rays of light are incident upon the light entrance surface 13b at various angles. It follows that light is reflected by the light entrance surface 13b at various angles of reflection according to the angles of the incidence. If there is a change in the resonance angle according to interaction of the analyte and ligand, a reflection angle at which light is attenuated is changed, too. An example of the photo detector 33 is a CCD area sensor, which retrieves such a change in the reflection angle as a gradual change in the attenuating position of the reflected light by the a photo receptor surface. The photo detector 33 generates measured data which is information of reaction state, and sends the measured data to the data analyzer 91. The data analyzer 91, in the data analyzing process, analyzes the measured data from the assay apparatus 11, to retrieve a characteristic and other information of the analyte.

Note that in Fig. 4, the illuminator 32 and the photo detector 33 in the optical assay unit 31 are positioned so that a direction of light projected and reflected between those intersects horizontally with a flow of the flow channel 16, which is unlike that structure depicted in Fig. 1B. The state of Fig. 1B is simplified for the convenience. However, in the invention the illuminator 32 and the photo detector 33 may be positioned according to in Fig. 1B so that a direction of light projected and reflected between those is horizontally aligned with the flow of the flow channel 16 between the pipettes.

In Fig. 2, the sensor unit 12 is illustrated structurally. The sensor unit 12 includes a flow channel block 41, the prism 14, a retaining block 42, and a lid 43. The flow channel block 41 has the at least one flow channel 16 formed through the same. The prism 14 has the metal film 13 overlaid on its upper surface. The retaining block 42 supports the flow channel block 41 by fitting a lower surface of the flow channel block 41 on an upper surface of the prism 14. The lid 43 is disposed higher than the retaining block 42.

The flow channel 16, for example three (3) channels, are formed in the flow channel block 41. The flow channel block 41 has a long shape, in which the flow channels 16 are arranged in a direction along the flow channel block 41. The flow channels 16 constitute the sensor cells 17 together with the metal film 13 in connection with its lower surface. See Figs. 1A and 1B. The flow channel block 41 is formed from elastic material for the purpose of ensuring tightness in contact with the metal film 13. Examples of elastic materials include rubber, polydimethylsilicone (PDMS), and the like. When a lower surface of the flow channel block 41 is pressed on an upper surface of the prism 14, the flow channel block 41 is elastically deformed, to remove a space between its surface and the metal film 13. Open lower portions of the flow channels 16 are closed water-tightly by the upper surface of the prism 14. Note that the number of the flow channels 16 may not be three, but can be one or two, or four or more.

The metal film 13 is deposited on the prism 14 by vapor deposition. The metal film 13 is formed in plural regions of long quadrilaterals opposed to the flow channel 16 formed in the flow channel block 41. Also, the linker film 22 is overlaid on an upper face or the sensing surface 13a of the metal film 13 and in regions associated with the flow channels 16. Retaining claws 14a are formed to project from the prism 14 at its sides as viewed longitudinally. Retaining claws 42a of the retaining block 42 are engageable with the retaining claws 14a. The flow channel block 41 is sandwiched between the retaining block 42 and the prism 14. A lower surface of the flow channel block 41 is kept fitted on the prism 14. A composite part as biosensor is obtained by unifying the flow channel block 41, the metal film 13 and the prism 14.

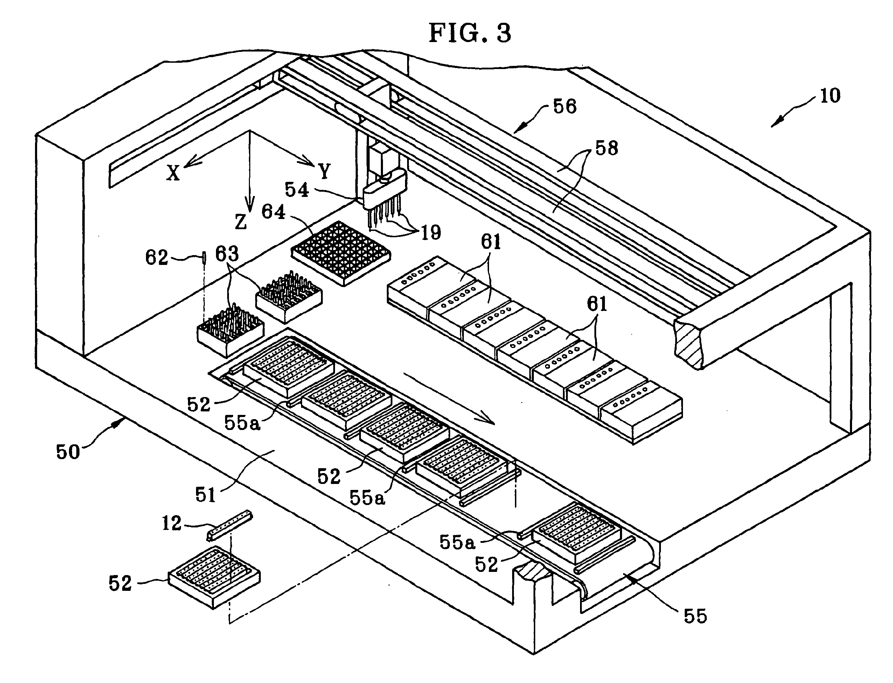

Retaining projections 14b protrude from ends of the prism 14 as viewed in its longitudinal direction. A sensor holder 52 of Fig. 3 contains a plurality of sensor units 12. As will be described later, the immobilization on the sensor unit 12 is effected while the sensor unit 12 is contained in the sensor holder 52. The retaining projections 14b are formed for positioning the sensor unit 12 in a contained state in the sensor holder 52 by engagement with the sensor holder 52.

A receiving orifice 42b is formed in the retaining block 42, and positioned at each of the entrance end opening 16a and the exit end opening 16b of the flow channel 16, for entry of an end of each of dispensing and removing pipettes 26a and 26b and the dispensing and removing pipettes 19a and 19b. The receiving orifice 42b has a funnel shape for introducing liquid ejected by the pipettes toward the entrance end opening 16a. When the retaining block 42 is retained on the prism 14 with the flow channel block 41, a lower side of the receiving orifice 42b is connected with the entrance end opening 16a and the exit end opening 16b, for communication of the receiving orifice 42b with the flow channel 16.

Cylindrically shaped bosses 42c are formed to project beside the receiving orifice 42b. Positioning holes 43a are formed in the lid 43. The bosses 42c are fitted in the positioning holes 43a, to position the lid 43 firmly. Double-sided adhesive tape 44 attaches the lid 43 to an upper surface of the retaining block 42. Note that suitable holes are formed in the double-sided adhesive tape 44 and associated with the receiving orifice 42b and the bosses 42c.

The lid 43 covers the receiving orifice 42b communicating to the flow channel 16, and prevents evaporation of liquid in the flow channel 16. The lid 43 is formed from rubber, elastomer, resin or other elastic material. A cross shaped slit 43b is formed in the lid 43 and positioned respectively at the receiving orifice 42b. The lid 43 is required to cover the receiving orifice 42b in order to prevent liquid in the flow channel 16 from evaporation. However, no pipette can enter the receiving orifice 42b if covering of the lid 43 is complete. So the cross shaped slit 43b is formed to enable insertion of pipettes, and to close the receiving orifice 42b while no pipette is inserted. If a pipette is forcibly pressed into the cross shaped slit 43b, edges of the cross shaped slit 43b are elastically deformed, to allow receipt of the pipette by becoming open. See Figs. 1A and 1B. When the pipette is externally pulled out of the cross shaped slit 43b, the cross shaped slit 43b elastically closes the receiving orifice 42b again by returning to its initial state.

In Fig. 3, a casing base 50 is included in the sample immobilizing device 10. A setting space or immobilizing stage 51 of the sample immobilizing device 10 is formed on the casing base 50 so as to place the sensor unit 12 therein. While the immobilizing stage 51 contains the sensor unit 12, the entirety of the immobilizing process is effected. Thus, the immobilizing device constitutes the immobilizing stage 51 for the sensor unit 12.

The sensor unit 12 is set in the sample immobilizing device 10 in a state contained in the sensor holder 52. For example, eight (8) of the sensor units 12 can be contained in the sensor holder 52. The retaining projections 14b of the sensor unit 12 are engaged with engageable portions of the sensor holder 52, which positions the sensor unit 12. Also, a lower side of the sensor holder 52 is open except for a region for supporting ends of the sensor unit 12. If removal of the sensor unit 12 from the sensor holder 52 is desired in the assay process, the open side of the sensor holder 52 is accessed, as will be described later. A shifting element 81a of Fig. 4 is inserted in the open side, to push up the sensor unit 12.

The immobilizing stage 51 is so large that ten of the sensor holders 52 can be installed at one time there. Plural pallets 53 are disposed in the immobilizing stage 51. Positioning bosses are formed on each of the pallets 53 for positioning the sensor holder 52.

A pipetting head group 54 with a liquid transfer mechanism is disposed in the sample immobilizing device 10, and includes pipetting heads of the three pipette couples 19 for combination with pipette tips. The pipetting head group 54 accesses the sensor unit 12 in a conveyor belt 55 to introduce and discharge liquid. As the pipette couples 19 are three pairs in the pipetting head group 54, three of the sensor cells 17 can be accessed in the sensor unit 12 for the introduction or discharge of liquid at the same time. A controller in the sample immobilizing device 10 controls the pipetting head group 54 for operation of the pipette couples 19 regarding various items, for example an amount of liquid in dispensation or suction, and a time sequence of the dispensation or suction.

After the immobilization, the sensor unit 12 is transferred to the stacking device and then to the assay apparatus 11 in a state contained in the sensor holder 52. The conveyor belt 55 is disposed on the immobilizing stage 51 for transporting the sensor holder 52 to the outside of the sample immobilizing device 10. A conveyor motor drives the conveyor belt 55. A plurality of sensor holders 52 are arranged on the conveyor belt 55 in one train including five holders. The maximum number of the sensor holders 52 that can be subjected at one time to the immobilizing process is five, because of placement on the conveyor belt 55. Note that the maximum number of the sensor holders 52 being placeable can be four or less, or six or more. This number can be determined suitably according to a length of the conveyor belt 55 and a number of paths of one or more conveyor belts 55.

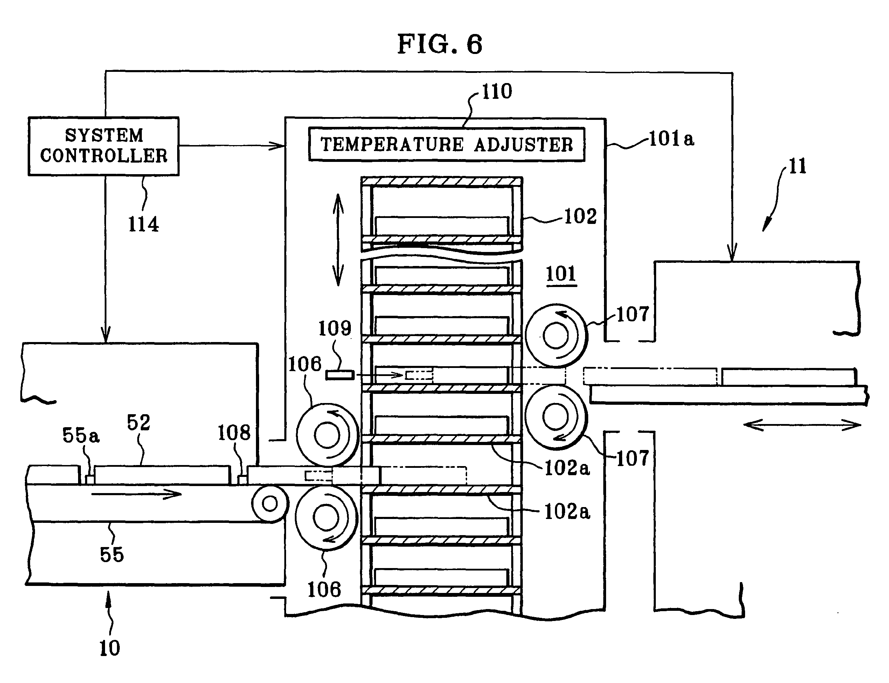

A plurality of ridges 55a are arranged on the conveyor belt 55 with an interval between the sensor holders 52. The ridges 55a come in contact with an end of the sensor holders 52 upon transfer of the sensor holders 52 to the stacking device, to push the sensor holders 52 toward the stacking device. After the immobilization, the conveyor belt 55 turns to advance the sensor holders 52 to the stacking device. A system controller 114 controls a sequence of operation of the conveyor belt 55. See Fig. 6.

A pipetting head moving assembly 56 on the casing base 50 moves the pipetting head group 54 in the three directions of X, Y and Z. An example of the pipetting head moving assembly 56 is constituted by elements including a transporting belt, pulley, carriage, motor and other well-known devices. The pipetting head moving assembly 56 includes a vertical shifter, a first horizontal shifter and a second horizontal shifter. The vertical shifter moves the pipetting head group 54 up and down. The first horizontal shifter includes guide rails 58, which keep the pipetting head group 54 movable in the direction Y together with the vertical shifter. The second horizontal shifter supports the guide rails 58 at two ends, and moves the pipetting head group 54 in the direction X together with the guide rails 58. The controller controls the pipetting head moving assembly 56, and controls the vertical position and horizontal position of the pipetting head group 54 by driving the pipetting head moving assembly 56.

Plural liquid reservoirs 61 are disposed on the casing base 50 for storing various liquids to be supplied to the flow channel 16, the liquids including ligand fluid, washing liquid, liquid buffer for immobilization, evaporation retardant or evaporation inhibitor, activating liquid, blocking liquid and the like. The number of the liquid reservoirs 61 is determined according to the number of the types of liquid in use. Six insertion orifices are formed in the liquid reservoirs 61. The number and interval of the orifices are determined according to the number of pipettes associated with the pipetting head group 54 and their interval. The pipetting head group 54, for introduction of the liquid into the sensor cells 17, accesses the liquid reservoirs 61 to suck liquid, and then moves to the immobilizing stage 51 for introduction to the sensor unit 12.

A pipette tip tray or rack 63 is placed on the casing base 50. Pipette tips 62 are stored in the pipette tip tray 63. The pipette tips 62 are fitted on ends of pipetting heads of the dispensing and removing pipettes 19a and 19b in a removable manner. As the pipette tips 62 come in direct contact with liquid, the pipette tips 62 are exchanged for respective types of liquids in use so as not to prevent mixture or contamination of the liquids. Each of the dispensing and removing pipettes 19a and 19b is composite pipette equipment, which has a mechanism for automatically picking up and releasing the pipette tips 62 so as to renew the pipette tips 62 without manual operation. If renewal of the pipette tips 62 is desired, at first the pipetting head group 54 releases a used one of the pipette tips 62 by use of an abandoning unit (not shown). Then the pipetting head group 54 accesses the pipette tip tray 63 to pick up unused ones of the pipette tips 62.

There is a well plate 64 having a plurality of wells arranged in a matrix form. The well plate 64 is used for storing liquid retrieved by the pipettes in a preliminary manner, and also for mixing a plurality of liquids to prepare liquid composition.

For the immobilization, the casing of the sample immobilizing device 10 is covered by a cover (not shown), which intercepts the inside of the sample immobilizing device with the immobilizing stage 51 from the outside. A temperature adjuster (not shown) keeps the temperature of the inside of the sample immobilizing device 10 adjustable. The sensor unit 12 remains set on the immobilizing stage 51 for a certain time after introduction of ligand on the sensor cells 17 and before completing the immobilization of the ligand 21a on the sensing surface 13a. In the course of preservation, the ligand fluid 21 is stirred or turbulently flowed in the flow channel 16 if required. The extent of immobilization depends upon temperature or other environmental conditions of the sensor unit 12. Thus, a temperature adjuster is used to keep the inside of the sample immobilizing device 10 at a predetermined temperature. The temperature and time for keeping the sample immobilizing device 10 are suitably determined according to a type of the ligand 21a.

When the immobilization is completed, liquid buffer is introduced as washing liquid. While the sensor cells 17 are filled with the ligand solution or ligand fluid as a fluid which contains ligand and fluid medium, the pipette 19a with the liquid buffer is inserted in the cross shaped slit 43b to introduce the liquid buffer to the sensor cells 17. When the liquid buffer is ejected from the entrance end opening 16a to flow into the flow channel 16, the ligand fluid having been filled in the flow channel 16 is pressurized toward the exit end opening 16b, and discharged from the flow channel 16. The pipette 19b is controlled for suction in synchronism with the pipette 19a in the dispensation. The pipette 19b retrieves the ligand fluid by suction at the same time as the supply of the liquid buffer. As a result, what is filled in the sensor cells 17 is changed over.

In Fig. 4, the assay apparatus 11 includes a holder moving mechanism 71, a pickup mechanism 72, a pipetting head moving assembly 73, and an assay stage 74. A casing 75 of the assay apparatus 11 accommodates those elements. The holder moving mechanism 71 includes a transporting belt 76, a carriage 77 and a pallet 78. The carriage 77 is secured on the transporting belt 76. The pallet 78 is secured to the carriage 77, and supports the sensor holder 52 containing the sensor unit 12 after the immobilization. The holder moving mechanism 71 shifts the pallet 78 in the direction X together with the sensor holder 52, to set each of the sensor units 12 to a pickup position for the pickup mechanism 72 to pick up.

The pickup mechanism 72 picks up the sensor unit 12 from the sensor holder 52, and includes the pressing shifter 81 and a handling head or chuck 82. The pressing shifter 81 presses up the sensor unit 12 contained in the sensor holder 52. The handling head 82, when the sensor unit 12 is pressed up by the pressing shifter 81, squeezes and holds the sensor unit 12. A shifter driving mechanism 83 drives the pressing shifter 81 to move up and down. A middle of the sensor holder 52 has a holder opening. A middle of the support panel or pallet 78 has an opening associated with the holder opening. The pressing shifter 81 moves upwards to come through the pallet 78, and contacts a lower surface of the sensor unit 12 by entry through the sensor holder 52 to push up the sensor unit 12.

The handling head 82 is movable in the direction Y, to transfer the sensor unit 12 to the assay stage 74. A head body or chuck body 82a is a base of the handling head 82. A ball screw 86 in a sensor moving mechanism extends beside the handling head 82. A nut 84 between the handling head 82 and the ball screw 86 keeps the handling head 82 movable in response to rotations of the ball screw 86.

In the assay stage 74 are disposed the illuminator 32 and the photo detector 33 under a level where the sensor unit 12 is disposed. The illuminator 32 and the photo detector 33 are positioned so that a traveling direction of light between those intersects horizontally with the flow of the flow channel 16, namely the direction of arrangement of the sensor cells 17.

A well plate or liquid reservoirs 88 is placed beside the assay stage 74, for storing the analyte fluid 27. Plural types of the analyte fluid 27 different from one another are contained in the wells or liquid reservoirs 88. Note that the assay apparatus 11 includes a well plate (not shown), and a pipette tip tray or rack, both in positions easily accessed by the pipette couple 26. The well plate contains liquid buffer for assay, and washing liquid. The pipette tip tray or rack contains pipette tips for renewal.

A pipetting head group 87 with a liquid transfer mechanism is constituted by the pipette couple 26. The pipetting head moving assembly 73 shifts the pipetting head group 87 in three dimensions of directions X, Y and Z, and positions the pipetting head group 87 selectively at the sensor unit 12 and the liquid reservoirs 88. The pipetting head moving assembly 73 is structurally the same as the pipetting head moving assembly 56 in the sample immobilizing device 10. The pipetting head group 87 accesses the sensor unit 12 as a target to be measured, and introduces and removes liquids. The pipette couple 26 is only one pair of pipettes unlike the pipetting head group 54 in the sample immobilizing device 10, because only the particular one of the sensor cells 17 is accessed by the pipetting head group 87.

The sensor unit 12 includes a plurality of the sensor cells 17 as described above. In the assay stage 74, the pipetting head moving assembly 73 moves the sensor unit 12 longitudinally, namely in the direction Y at a pitch of arrangement of the sensor cells 17, to shift and set each of the sensor cells 17 in the assay position on the light path of the illuminator 32 one after another.

For an assay, the pipetting head group 87 accesses the well plate or liquid reservoirs 88 and sucks the analyte fluid 27 of one type, and then moves to the assay stage 74 to supply one of the sensor cells 17 with the analyte fluid 27 in the assay position. The sensor unit 12 sent out of the sample immobilizing device 10 continues containing the evaporation retardant in the sensor cells 17 until the onset of assay in a state mounted in the assay apparatus 11. Note that the evaporation retardant, upon introduction of the liquid buffer for the assay, is pressurized and discharged from the sensor cells 17 by the liquid buffer, and sucked by the pipette 19b.

Measured data of the assay read by the photo detector 33 is transmitted to the data analyzer 91 by a communication interface. The data analyzer 91 obtains a result of assaying the reaction of the analyte and the ligand according to the measured data.

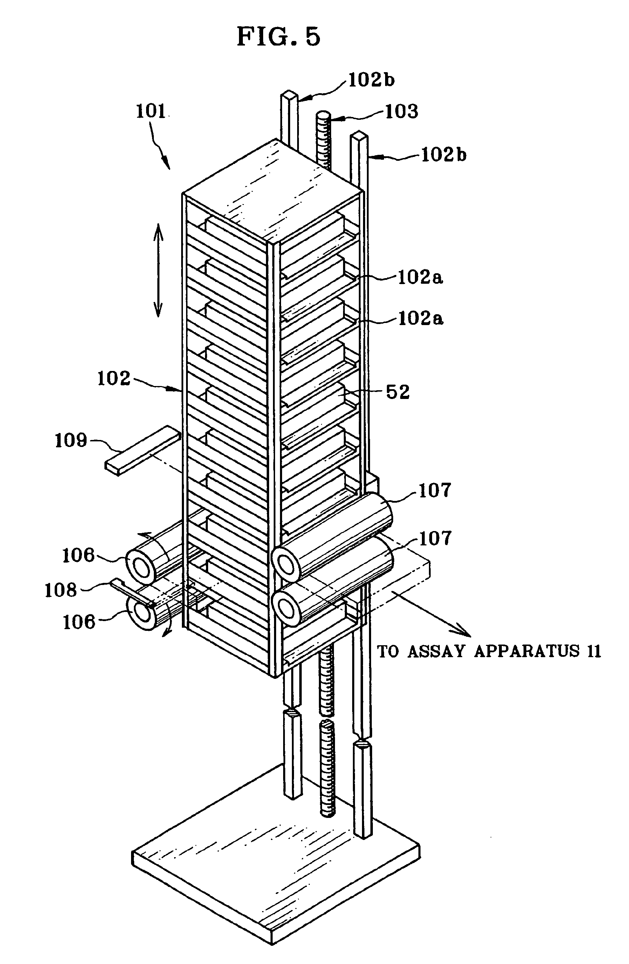

In Fig. 5, a stacking stage 101 is constituted by a stacking device, and stores the sensor unit 12 after the immobilization before the assay. The stacking device is disposed between the sample immobilizing device 10 and the assay apparatus 11, receives the sensor holder 52 with the sensor unit 12 from the sample immobilizing device 10, stores the same in a preliminary manner, and then transfers the sensor holder 52 to the assay apparatus 11. See Fig. 6.

A stacking rack 102 is incorporated in the stacking stage 101, and accommodates a plurality of the sensor holders 52. The stacking rack 102 includes tray portions 102a, a rack casing and a support mechanism 102b. The tray portions 102a support the sensor holder 52. The rack casing contains the tray portions 102a in a supported manner inside lateral openings. The support mechanism 102b keeps the rack casing movable. The stacking rack 102 is an upright type in which the tray portions 102a are arranged in a state laid over one another. The upright structure is effective in reducing a space required for installation. The number of the tray portions 102a is ten. So the ten sensor holders 52 can be contained in the stacking rack 102. The number of the sensor holders 52 that the sample immobilizing device 10 can handle at one time is five. Thus, the tray portions 102a can contain the sensor holders 52 of the number two times as much as the number of holders that the sample immobilizing device 10 can handle.

A ball screw 103 as tray setting mechanism extends in a vertical direction relative to the stacking rack 102, and is connected with the stacking rack 102. When the ball screw 103 rotates, the stacking rack 102 moves up and down according to the longitudinal direction of the ball screw 103. Guide rails 104 guide movement of the stacking rack 102. An inserting roller set 106 as a first transfer mechanism beside the stacking rack 102 receives the sensor holder 52 from the sample immobilizing device 10. A retrieving roller set 107 as a second transfer mechanism advances the sensor holder 52 to the assay apparatus 11. The stacking rack 102 moves up and down to set the stacking rack 102 at a level of each one of the inserting roller set 106 and the retrieving roller set 107.

In Fig. 6, the inserting roller set 106 is disposed at a level of the conveyor belt 55 in the sample immobilizing device 10. The retrieving roller set 107 is disposed at a level of the pallet 78 of the assay apparatus 11. Each of the inserting roller set 106 and the retrieving roller set 107 is constituted by a pair of rolls. The inserting roller set 106 nips the sensor holder 52 moved by the conveyor belt 55 of the sample immobilizing device 10, and moves the sensor holder 52 into each of the tray portions 102a of the stacking rack 102. A transfer pusher 108 as a first transfer mechanism is caused by the inserting roller set 106 to contact a rear end of the sensor holder 52 upon entry to the stacking rack 102, and pushes the sensor holder 52 to the middle of the tray portions 102a. The transfer pusher 108 in the initial position indicated by the solid line is set outside the path of the sensor holder 52. After the sensor holder 52 is sent to the stacking rack 102 by the inserting roller set 106, the transfer pusher 108 enters the path as indicated by the phantom line, to push the sensor holder 52. After pushing, the transfer pusher 108 returns to the initial exposition.

The retrieving roller set 107 nips the sensor holder 52 inside the stacking rack 102, and moves the sensor holder 52 to the assay apparatus 11. A transfer pusher 109 as a second transfer mechanism contacts the rear end of the sensor holder 52, and pushes the sensor holder 52 to the retrieving roller set 107 from the middle of the stacking rack 102. Thus the retrieving roller set 107 nips the sensor holder 52.

A stacking casing 101a constitutes the stacking stage 101. A temperature adjuster 110 as an environment conditioning unit is contained in the stacking stage 101 for adjusting temperature inside the stacking casing 101a. Thus, the temperature of stacking the sensor unit 12 after the immobilization can be suitably set. Furthermore, it is possible to adjust other parameters related to conditioning of the environment, for example humidity.

The controller 114 is connected with the sample immobilizing device 10, the stacking stage 101 and the assay apparatus 11, and is constituted by a personal computer (PC), workstation or the like, to control those. The controller 114 stores information of the start of the sample immobilizing device 10 and the assay apparatus 11, the completion time of the sample immobilizing device 10 and the assay apparatus 11, and their amount of handling. The controller 114 determines the sequence for the advance and an amount of advance. Furthermore, the immobilizing, stacking and assay stages are constituted by separate casings. This makes it possible to assay without lowering a throughput, because the immobilizing process can be simultaneous with the assay process.

The operation of the above construction is described. In the immobilizing process, the sensor unit 12 is placed in the immobilizing stage 51 of the sample immobilizing device 10 in a state contained in the sensor holder 52. At first, buffer for immobilization is introduced into each of the sensor cells 17, to wet the sensing surface 13a. Then activating liquid is introduced to activate the sensing surface 13a. After washing, the ligand fluid 21 is introduced into the sensor cells 17, to start immobilization. The sensor unit 12 is preserved and left to stand on the immobilizing stage 51. In the course of this, the ligand 21a in the solution binds with the linker film 22, and becomes immobilized.

When the immobilization is completed upon a lapse of predetermined time, the ligand with the sensing surface is washed, and then blocked according to blocking process. After the blocking, the conveyor belt 55 turns to transport the sensor holder 52 to the stacking stage 101, and inserted in the stacking rack 102. The inside of the stacking rack 102 is controlled at a temperature of a predetermined level, to store the sensor unit 12, which may be according to known techniques of incubators. The sample immobilizing device 10 from which the sensor unit 12 is ejected is immediately provided with an unused sensor, to start the immobilization. The use of the stacking stage 101 can store the sensor unit 12 after the immobilization in a preliminary manner. Thus, throughput of the immobilization can be high because of the prompt start of next process.

When a certain number of the sensor units 12 are stored in the stacking stage 101 after the immobilization, the sensor units 12 are advanced to the assay apparatus 11 one after another, and assayed. The controller 114 determines the time schedule of the immobilization, stacking and assay and an amount to be stacked, for the purpose of optimize the efficiency.

In the above embodiment, the sensor unit includes the three sensor cells. However, the number of the sensor cells can be two, or four or more. Furthermore, sensor cells can be arranged in a matrix form, namely two or more arrays. Various modifications are possible according to the structure of the assay apparatus, which include a form of a sensor unit having one sensor cell.

In the above embodiment, the stacking rack 102 is an upright structure. Various structures can be used for the stacking rack 102. For examples, the plural holders can be arranged beside one another. Furthermore, it is possible to install the stacking rack 102 in a stationary manner in the vertical direction, and to set the inserting roller set 106 and the retrieving roller set 107 in a vertically shiftable manner.

In the above embodiment, the immobilizing stage 51, the assay stage 74 and the stacking stage 101 are in the casings separate from one another. However, one casing can be used for including the stacking stage 101 and the immobilizing stage 51. Also, one casing can be used for including the stacking stage 101 and the assay stage 74.

In addition to the SPR sensor, an assay sensor according to the invention can be other sensor in utilizing attenuated total reflection. One example of sensor according to utilizing the attenuated total reflection is a leaky mode sensor. The leaky mode sensor includes a dielectric medium, a cladding layer overlaid on the dielectric medium, and an optical waveguide layer overlaid on the cladding layer, those layers constituting a thin film. A first surface of the thin film is a sensing surface on the optical waveguide layer. A second surface of the thin film is a light entrance surface on the cladding layer. When light enters the light entrance surface to satisfy the condition of the total reflection, part of the light passes through the cladding layer, and enters the optical waveguide layer. A guided mode to propagate light is excited responsively in the optical waveguide layer, to attenuate the reflected light on the thin film/dielectric interface. An angle of the incidence at which the guided mode is excited is changeable according to the refraction index of the medium positioned on the sensing surface. This is similar to the characteristic of the resonance angle of the SPR sensor. The attenuation of the reflected light is detected, so that it possible to measure a state of reaction on the sensing surface.

Various modifications are possible by means of elements, devices, systems and the like known in the art of the assay. For example, combinations and related arrangements of system components disclosed in U.S.P. No. 6,267,927 (corresponding to JP-A 11-242038) can be used by partial alteration for the SPR system. In the stacking stage, elements and their combinations disclosed in U.S.P. No. 6,564,120 can be used for storage of sensor units.

Although the present invention has been fully described by way of the preferred embodiments thereof with reference to the accompanying drawings, various changes and modifications will be apparent to those having skill in this field.

## Claims

1. An assay apparatus for assay in utilizing attenuated total reflection, being loaded with at least one sensor unit (12), having a transparent dielectric medium (14), and thin film (13) with a light entrance surface (13b) and a sensing surface (13a) reverse to said light entrance surface, said light entrance surface being fitted on said dielectric medium, and said sensing surface being adapted to causing interaction between ligand (21a) and analyte (27a), and including an optical assay unit (31) for applying illuminating light through said dielectric medium to said light entrance surface in such a form as to satisfy a condition of total reflection, and for detecting said illuminating light reflected by said light entrance surface during said interaction of said ligand and said analyte, said assay apparatus comprising:
an immobilizing stage (51) for introducing said ligand to said sensor unit to be immobilized on said sensing surface;
an assay stage (74) for causing said analyte to contact said sensing surface, and for assaying said interaction by detecting attenuation of said illuminating light; and
a stacking stage (101) adapted to store said sensor unit after introduction of said ligand before assay in said assay stage, wherein said sensor unit (12) is contained in a sensor holder (52) the assay apparatus further comprising
a first transfer mechanism for moving said sensor holder from said immobilizing stage (51) into said stacking stage (101); and
a second transfer mechanism for moving said sensor holder from said stacking stage (101) into said assay stage (74).

2. An assay apparatus as defined in claim 1, wherein said at least one sensor unit comprises plural sensor units;
said sensor holder is used for containing said plural sensor units to transfer said sensor units together between said immobilizing stage, said assay stage and said stacking stage.

3. An assay apparatus as defined in claim 2, wherein each of said sensor units includes plural flow channels, respectively having said sensing surface, and provided with said ligand and said analyte introduced thereto.

4. An assay apparatus as defined in claim 3, wherein said assay stage sequentially assays for said plural sensor units in said sensor holder one after another.

5. An assay apparatus as defined in claim 4, further comprising:
first and second casings for constituting respectively said immobilizing and assay stages; and
a third casing, separate from any of said first and second casings, for constituting said stacking stage.

6. An assay apparatus as defined in claim 4, further comprising:
a first casing for constituting said immobilizing stage;
a second casing, separate from said first casing, for constituting said assay stage;
wherein said stacking stage is positioned in either one of said first and second casings.

7. An assay apparatus as defined in claim 2, wherein said stacking stage includes a stacking rack for containing plural sensor holders comprised by said sensor holder.

8. An assay apparatus as defined in claim 1, wherein said stacking rack extends in an upright manner, and plural tray portions are arranged in said stacking rack over one another, for supporting said sensor holders.

9. An assay apparatus as defined in claim 8, further comprising a tray setting mechanism for moving one of said stacking rack and said first or second transfer mechanism relative to a remaining one thereof in a substantially vertical direction, so as to set one of said tray portions at a sensor holder to be moved in or out at said first or second transfer mechanism.

10. An assay apparatus as defined in claim 9, wherein said stacking rack includes:
a rack casing, having a prismatic tubular shape, and disposed to extend substantially in said vertical direction; and
at least one lateral opening, formed in a lateral face of said rack casing, for allowing said first and second transfer mechanisms to access said tray portions, to keep said sensor holder movable in and out.

11. An assay apparatus as defined in claim 9, wherein said tray setting mechanism moves said stacking rack.

12. An assay apparatus as defined in claim 1, further comprising a controller for determining an amount of immobilization in said immobilizing stage and an amount of storing in said stacking storage according to an amount of assay in said assay stage.

13. An assay apparatus as defined in claim 1, wherein said stacking stage includes an environment conditioning unit for adjusting an environmental condition.

14. An assay apparatus as defined in claim 13, wherein said environment conditioning unit comprises a temperature adjuster.

15. An assay apparatus as defined in claim 1, wherein said sensor unit includes:
a flow channel block secured to an upside of said dielectric medium;
a flow channel, formed in said flow channel block to extend in a longitudinal direction of said flow channel block, for causing a flow of said ligand or said analyte to said sensing surface.

## Patentansprüche

1. Prüfvorrichtung zur Prüfung unter Nutzung gedämpfter Totalreflexion, beladen mit mindestens einer Sensoreinheit (12), die ein transparentes dielektrisches Medium (14) und eine Dünnschicht (13) mit einer Lichteintrittsfläche (13b) und einer der Lichteintrittsfläche abgewandten Sensorfläche (13a) enthält, wobei die Lichteintrittsfläche an das dielektrische Medium angepasst ist und die Sensorfläche dazu ausgebildet ist, eine Wechselwirkung zwischen einem Liganden (21a) und einem Analyt (27a) zu veranlassen, und umfassend eine optische Prüfeinheit (31) zum Aufbringen von Beleuchtungslicht durch das dielektrische Medium auf die Lichteintrittsfläche in einer derartigen Form, dass eine Bedingung für Totalreflexion erfüllt ist, und zum Detektieren des von der Lichteintrittsfläche während der Wechselwirkung zwischen dem Liganden und dem Analyt reflektierten Beleuchtungslichts, umfassend:
eine Immobilisierungsbühne (51) zum Einführen des Liganden in die Sensoreinheit, um auf der Sensorfläche immobilisiert zu werden;
eine Prüfbühne (74) zum Veranlassen des Analyts, die Sensorfläche zu berühren, und zum Untersuchen der Wechselwirkung durch Detektieren von Dämpfung des Beleuchtungslichts; und
eine Stapelbühne (101), ausgebildet zum Speichern der Sensoreinheit nach dem Einführen des Liganden, bevor eine Prüfung in der Prüfbühne stattfindet,
wobei die Sensoreinheit (12) in einem Sensorhalter (52) aufgenommen ist, und wobei die Prüfvorrichtung weiterhin aufweist:
einen ersten Transfermechanismus zum Bewegen des Sensorhalters von der Immobilisierungsbühne (51) in die Stapelbühne (101); und
einen zweiten Transfermechanismus zum Bewegen des Sensorhalters von der Stapelbühne (101) in die Prüfbühne (74).

2. Vorrichtung nach Anspruch 1, bei der die mindestens eine Sensoreinheit mehrere Sensoreinheiten umfasst;
der Sensorhalter dazu dient, die mehreren Sensoreinheiten aufzunehmen, um sie zusammen zwischen der Immobilisierungsbühne, der Prüfbühne und der Stapelbühne zu transferieren.

3. Vorrichtung nach Anspruch 2, bei der jede der Sensoreinheiten mehrere Strömungskanäle enthält, die jeweils eine Sensorfläche besitzen und mit dem Liganden und dem darin eingebrachten Analyt ausgestattet sind.

4. Vorrichtung nach Anspruch 3, bei dem die Prüfbühne sequentiell und nacheinander die mehreren Sensoreinheiten in dem Sensorhalter prüft.

5. Vorrichtung nach Anspruch 4, weiterhin umfassend:
ein erstes und ein zweites Gehäuse für die Immobilisierungs- bzw. die Prüfbühne;
ein drittes, von dem ersten und dem zweiten Gehäuse getrenntes Gehäuse für die Stapelbühne.

6. Vorrichtung nach Anspruch 4, weiterhin umfassend:
ein erstes Gehäuse für die Immobilisierungsbühne;
ein zweites, von dem ersten Gehäuse getrenntes Gehäuse für die Prüfbühne;
wobei die Stapelbühne sich in entweder dem ersten oder dem zweiten Gehäuse befindet.

7. Vorrichtung nach Anspruch 2, bei der die Stapelbühne ein Stapelgestell zur Aufnahme mehrerer Sensorhalter aufweist, die von dem Sensorhalter gebildet werden.

8. Vorrichtung nach Anspruch 1, bei der das Stapelgestell sich in aufrechter Richtung erstreckt und mehrere Fächer in dem Stapelgestell übereinander angeordnet sind, um die Sensorhalter zu haltern.

9. Vorrichtung nach Anspruch 8, weiterhin umfassend einen Facheinstellmechanismus zum Bewegen entweder des Stapelgestells oder des ersten oder des zweiten Transfermechanismus in bezug auf das Gegenstück in etwa vertikaler Richtung, um eines der Fächer an einem Sensorhalter einzustellen, der an dem ersten oder dem zweiten Transfermechanismus hinein oder herauszubewegen ist.

10. Vorrichtung nach Anspruch 9, bei der das Stapelgestell enthält:
ein Gestellgehäuse mit einer prismatischen rohrförmigen Gestalt, angeordnet in einer sich im wesentlichen vertikal erstreckenden Richtung; und
mindestens eine seitliche Öffnung, die in einer Seitenfläche des Gestellgehäuses ausgebildet ist, damit der erste und der zweite Transfermechanismus Zugang zu den Fächern haben, um den Sensorhalter hinein und herausbewegen zu können.

11. Vorrichtung nach Anspruch 9, bei der der Facheinstellmechanismus das Stapelgestell bewegt.

12. Vorrichtung nach Anspruch 1, weiterhin umfassend eine Steuerung zum Bestimmen eines Maßes der Immobilisierung in der Immobilisierungsbühne und eines Maßes der Speicherung in dem Stapelspeicher abhängig von dem Umfang der Prüfung in der Prüfbühne.

13. Vorrichtung nach Anspruch 1, bei der die Stapelbühne eine Umgebungs-Konditioniereinheit enthält, um die Umgebungsbedingungen einzustellen.

14. Vorrichtung nach Anspruch 13, bei der die Umgebungs-Konditioniereinheit einen Temperaturregler enthält.

15. Vorrichtung nach Anspruch 1, bei der die Sensoreinheit enthält:
einen Strömungskanalblock, der an einer Oberseite des dielektrischen Mediums angebracht ist;
einen Strömungskanal, der in dem Strömungskanalblock sich in Längsrichtung des Strömungskanalblocks erstreckend ausgebildet ist, um einen Strom des Liganden oder des Analyts zu der Sensorfläche zu veranlassen.

## Revendications

1. Appareil d'analyse pour l'analyse en utilisant la réflexion totale atténuée, qui est chargé avec au moins une unité de capteur (12), ayant un milieu diélectrique transparent (14), et un film fin (13) avec une surface d'entrée de lumière (13b) et une surface de détection (13a) inversée par rapport à ladite surface d'entrée de lumière, ladite surface d'entrée de lumière étant montée sur ledit milieu diélectrique, et ladite surface de détection étant adaptée pour provoquer l'interaction entre le ligand (21a) et la substance à analyser (27a), et comprenant une unité d'analyse optique (31) pour appliquer une lumière d'éclairage à travers ledit milieu diélectrique vers ladite surface d'entrée de lumière dans une forme telle qu'elle satisfait une condition de réflexion totale, et pour détecter ladite lumière d'éclairage réfléchie par ladite surface d'entrée de lumière pendant ladite interaction dudit ligand et de ladite substance à analyser, ledit appareil d'analyse comprenant :
une platine d'immobilisation (51) pour introduire ledit ligand dans ladite unité de capteur destiné à être immobilisée sur ladite surface de détection ;
une platine d'analyse (74) pour amener ladite substance à analyser à entrer en contact avec ladite surface de détection, et pour analyser ladite interaction en détectant l'atténuation de ladite lumière d' éclairage ; et
une platine d'empilage (101) adaptée pour stocker ladite unité de capteur après l'introduction dudit ligand avant l'analyse dans ladite platine d'analyse,
dans lequel, ladite unité de capteur (12) est contenue dans un support de capteur (52), l'appareil d'analyse comprenant en outre :
un premier mécanisme de transfert pour déplacer ledit support de capteur de ladite platine d'immobilisation (51) dans ladite platine d'empilage (101) ; et
un second mécanisme de transfert pour déplacer ledit support de capteur de ladite platine d'empilage (101) dans ladite platine d'analyse (74).

2. Appareil d'analyse selon la revendication 1, dans lequel ladite au moins une unité de capteur comprend plusieurs unités de capteur;
ledit support de capteur est utilisé pour contenir lesdites plusieurs unités de capteur pour transférer lesdites unités de capteur ensemble entre ladite platine d'immobilisation, ladite platine d'analyse et ladite platine d'empilage.

3. Appareil d'analyse selon la revendication 2, dans lequel chacune desdites unités de capteur comprend plusieurs canaux d'écoulement, ayant respectivement ladite surface de détection, et prévue avec ledit ligand et ladite substance à analyser introduite dans celui-ci.

4. Appareil d'analyse selon la revendication 3, dans lequel ladite platine d'analyse analyse de manière séquentielle lesdites plusieurs unités de capteur dans ledit support de capteur les unes après les autres.

5. Appareil d'analyse selon la revendication 4, comprenant en outre :
des premier et deuxième boîtiers pour constituer respectivement lesdites platines d'immobilisation et d'analyse ; et
un troisième boîtier, séparé de l'un quelconque desdits premier et deuxième boîtiers pour constituer ladite platine d'empilage.

6. Appareil d'analyse selon la revendication 4, comprenant en outre :
un premier boîtier pour constituer ladite platine d'immobilisation ;
un deuxième boîtier, séparé dudit premier boîtier, pour constituer ladite platine d'analyse ;
dans lequel ladite platine d'analyse est positionnée dans l'un parmi lesdits premier et deuxième boîtiers.

7. Appareil d'analyse selon la revendication 2, dans lequel ladite platine d'empilage comprend un râtelier d'empilage pour contenir plusieurs supports de capteur composés par ledit support de capteur.

8. Appareil d'analyse selon la revendication 1, dans lequel ledit râtelier d'empilage s'étend d'une manière verticale, et plusieurs parties de plateau sont agencées dans ledit râtelier d'empilage les unes sur les autres, pour supporter lesdits supports de capteur.

9. Appareil d'analyse selon la revendication 8, comprenant en outre un mécanisme d'installation de plateau pour déplacer l'un parmi ledit râtelier d'empilage et lesdits premier ou second mécanismes de capteur par rapport à un mécanisme restant dans une direction sensiblement verticale, afin de positionner l'une desdites parties de plateau au niveau d'un support de capteur pour être déplacée à l'intérieur ou à l'extérieur au niveau desdits premier ou second mécanismes de transfert.

10. Appareil d'analyse selon la revendication 9, dans lequel ledit râtelier d'empilage comprend :
un boîtier de râtelier, ayant une forme tubulaire prismatique et déposé pour s'étendre sensiblement dans ladite direction verticale ; et
au moins une ouverture latérale formée dans une face latérale dudit boîtier de râtelier, pour permettre auxdits premier et second mécanismes de transfert d'avoir accès auxdites parties de plateau, pour maintenir ledit support de capteur mobile à l'intérieur et à l'extérieur.

11. Appareil d'analyse selon la revendication 9, dans lequel ledit mécanisme de positionnement de plateau déplace ledit râtelier d'empilage.

12. Appareil d'analyse selon la revendication 1, comprenant en outre un contrôleur pour déterminer une quantité d'immobilisation dans ladite platine d'immobilisation et une quantité de stockage dans ledit stockage d'empilage selon une quantité d'analyse dans ladite platine d'analyse.

13. Appareil d'analyse selon la revendication 1, dans lequel ladite platine d'empilage comprend une unité de conditionnement environnemental pour ajuster une condition environnementale.

14. Appareil d'analyse selon la revendication 13, dans lequel ladite unité de conditionnement environnemental comprend un ajusteur de température.

15. Appareil d'analyse selon la revendication 11, dans lequel ladite unité de capteur comprend :
un bloc de canal d'écoulement fixé sur le dessus dudit milieu diélectrique;
un canal d'écoulement, formé dans ledit bloc de canal d'écoulement pour s'étendre dans une direction longitudinale dudit bloc de canal d'écoulement, pour provoquer un écoulement dudit ligand ou de ladite substance à analyser vers ladite surface de détection.
